# EUROPÄISCHE PATENTSCHRIFT

(11) **EP 2 886 383 B1**
(45) Veröffentlichungstag und Bekanntmachung des Hinweises auf die Patenterteilung: **11.07.2018**
(21) Anmeldenummer: 14187700.1
(22) Anmeldetag: 06.10.2014
(51) Int. Cl.: B60K 6/48, B60K 6/547, B60K 6/383, F16H 3/093, F16H 3/10

(54) **Hybrid-Antriebsstrang für ein Kraftfahrzeug**
Hybrid power train for a motor vehicle
Chaîne cinématique hybride pour un véhicule automobile

(30) Priorität: 19.12.2013 DE 102013022142
(43) Veröffentlichungstag der Anmeldung: 24.06.2015
(73) Patentinhaber: GETRAG B.V. & Co. KG, 74199 Untergruppenbach (DE)
(72) Erfinder: Rühle, Günter, 74369 Löchgau (DE); Sommer, Klaus, 74182 Obersulm (DE); Wenzel, Sören, 74850 Schefflenz (DE)
(74) Vertreter: Rausch, Gabriele

(56) Entgegenhaltungen:
- EP-A2- 0 083 747
- WO-A1-2006/040150
- DE-A1- 10 160 884
- DE-A1-102011 077 590
- DE-A1-102011 084 622

## Beschreibung

Die vorliegende Erfindung betrifft einen Hybrid-Antriebsstrang für ein Kraftfahrzeug, mit einem Verbrennungsmotor, mit einer elektrischen Maschine und mit einem Doppelkupplungsgetriebe, das eine Doppelkupplung und eine Stirnradgetriebeanordnung mit zwei Teilgetrieben aufweist.

Ein derartiger Hybrid-Antriebsstrang ist beispielsweise aus den Dokumenten DE 10 2011 110 444 A1 oder DE 10 2011 102 267 A1 bekannt.

Bei Hybrid-Antriebssträngen unterscheidet man generell zwischen solchen Antriebssträngen, bei denen Antriebsleistung primär von dem Verbrennungsmotor bereitgestellt wird und die elektrische Maschine als unterstützendes Aggregat eingesetzt wird. Derartige Antriebsstränge weisen häufig ein weitgehend herkömmliches Layout auf, wobei sowohl Verbrennungsmotor als auch elektrische Maschine in der Regel vor einem Eingang einer Kupplungsanordnung angeordnet sind. Die heute üblichen Doppelkupplungsgetriebe, die in derartigen Hybrid-Antriebssträngen verwendet werden, weisen fünf, sechs, sieben der mehr Vorwärtsgangstufen auf und bauen folglich axial vergleichsweise lang. Dies stellt insbesondere beim Einbau eines solchen Antriebsstranges in einer Front-Querbauweise in einem Kraftfahrzeug eine hohe Hürde dar.

Ein weiterer Typ von Hybrid-Antriebsstrang sind die so genannten "Range-Extender". Hier ist die primäre Antriebsquelle in der Regel die elektrische Maschine. Der Verbrennungsmotor wird lediglich zum Aufladen einer Batterie oder aber in einem Hilfs-Betriebsmodus verwendet. Die Hybrid-Antriebsstränge, die aus den zwei oben genannten Dokumenten bekannt geworden sind, betreffen derartige Range-Extender. Bei dieser Art von Hybrid-Antriebsstrang werden in der Regel nur eine einzelne oder zwei Vorwärtsgangstufen implementiert, da eine elektrische Maschine aus dem Stand (Drehzahl 0) anfahren kann und im Stand ein hohes Drehmoment bereitstellen kann, was das Bereitstellen einer Vielzahl von Gangstufen in der Regel überflüssig macht.

Bei Range-Extender-Abtriebssträngen wird der Verbrennungsmotor, sofern er auch als Antriebsquelle verwendet wird, in der Regel nur bei höheren Geschwindigkeiten eingesetzt, so dass die Wahl von einer Vorwärtsgangstufe oder zwei Vorwärtsgangstufen einen vernünftigen Kompromiss darzustellen scheint. Bei einem Hybrid-Antriebsstrang mit einem Doppelkupplungsgetriebe ist es auch bekannt, eine elektrische Maschine an den Eingang von einem der beiden Teilgetriebe anzubinden (DE 10 2010 004 711 A1). Ferner sind Hybridfahrzeuge mit Doppelkupplungsgetriebe bekannt, bei denen zwischen einer elektrischen Maschine und einem Verbrennungsmotor zwei weitere Kupplungen angeordnet sind (Anfahrkupplung und Trennkupplung). Ein derartiger Antriebsstrang ist beispielsweise aus dem Dokument WO 2009/056193 A2 bekannt geworden.

Ferner ist es bekannt, die Antriebsleistung einer elektrischen Maschine und eines Verbrennungsmotors über eine Planetengetriebeanordnung zu koppeln (WO 2010/063735 A1).

Ein anderer Ansatz eines Hybridantriebs besteht darin, ein Getriebe vorzusehen, das zwei Gangstufen aufweist, die ausschließlich der elektrischen Maschine zugeordnet sind, und drei Vorwärtsgangstufen, die ausschließlich dem Verbrennungsmotor zugeordnet sind (WO 2012/079683 A2).

Das Dokument WO 2006/040150 A1 offenbart ein Baukastensystem für Doppelkupplungsgetriebe, die alternativ mit oder ohne Hybridfunktion ausgestattet werden können, insbesondere für frontgetriebene Fahrzeuge. Der Elektromotor für die Hybridfunktion ist parallel zu zwei Vorgelegewellen beabstandet.

Das gattungsgemäße Dokument DE 10 2011 077 590 A1 offenbart ein Hybridfahrzeug mit einem in einer Fahrzeuglängseinrichtung eingebauten Verbrennungsmotor, der ein Getriebe antreibt, wobei ein Abtrieb des Getriebes mit einem Vorderachsdifferential gekoppelt ist. Eine elektrische Maschine ist vorgesehen, die im Bereich einer Hinterachse des Fahrzeugs angeordnet und zum Antreiben von Hinterrädern des Fahrzeugs vorgesehen ist.

Vor diesem Hintergrund ist es eine Aufgabe der Erfindung, einen verbesserten Hybrid-Antriebsstrang anzugeben.

Diese Aufgabe wird durch einen Hybrid-Antriebsstrang gemäß Anspruch 1 gelöst.

Eine derartige Ausgestaltung eignet sich insbesondere für den Einbau des Antriebsstranges in Front-Querbauweise in einem Kraftfahrzeug mit Frontantrieb.

Von besonderem Vorzug ist es hierbei, wenn der Verbrennungsmotor koaxial zu der Eingangswellenanordnung angeordnet ist, wobei die elektrische Maschine über einen Stirnradsatz oder durch eine Zahnkette mit dem Eingangsglied der Doppelkupplungsanordnung verbunden ist.

Über den Stirnradsatz kann dann eine geeignete Übersetzung eingerichtet werden, so dass die elektrische Maschine im Antriebsmodus mit relativ hohen Drehzahlen betrieben werden kann, so dass die elektrische Maschine kompakt realisiert werden kann.

Gemäß einer weiteren bevorzugten Ausführungsform bilden die Abtriebszahnräder und das Triebzahnrad des Differentials einen Triebradsatz, der in axialer Richtung zwischen der Doppelkupplungsanordnung und Radsatzanordnungen der Vorwärtsgangstufen angeordnet ist.

Durch diese Maßnahme kann eine Anbindung an das Differential in axialer Richtung gesehen zwischen der Doppelkupplungsanordnung und dem Verbrennungsmotor einerseits und der Stirnradgetriebeanordnung andererseits erfolgen, so dass sich eine gute Bauraumausnutzung ergeben kann, insbesondere bei einem Front-Quereinbau in einem Kraftfahrzeug.

Ferner ist es vorteilhaft, wenn die erste Eingangswelle und die erste Ausgangswelle über zwei Radsätze miteinander verbunden sind, die einer ersten und einer dritten Vorwärtsgangstufe zugeordnet sind.

Die genannten zwei Radsätze können dabei jeweils Losräder aufweisen, die über zugeordnete Schaltkupplungen mit der zugeordneten Welle verbindbar sind.

In einer Ausführungsform ist es bevorzugt, wenn der der ersten Vorwärtsgangstufe zugeordnete Radsatz ein an der ersten Ausgangswelle über einen Freilauf gelagertes Losrad aufweist.

Durch diese Maßnahme kann eine Schaltkupplung eingespart werden, was ebenfalls zu einer axial kompakten Bauweise beitragen kann.

Gemäß einer weiteren bevorzugten Ausführungsform sind die zweite Eingangswelle und die zweite Ausgangswelle über den Radsatz miteinander verbunden, der mit den zwei in Eingriff stehenden Festrädern gebildet ist und der einer zweiten Vorwärtsgangstufe zugeordnet ist.

Das der zweiten Vorwärtsgangstufe zugeordnete Teilgetriebe beinhaltet dann nur diese eine Vorwärtsgangstufe.

Erfindungsgemäß weist dieses eine der Teilgetriebe nur eine Gangstufe (beispielsweise die zweite Vorwärtsgangstufe) auf, die durch den Radsatz mit den zwei in Eingriff stehenden Festrädern gebildet ist.

Mit anderen Worten kann bei einer Stirnradgetriebeanordnung mit drei Vorwärtsgangstufen, bei der nur die zweite Vorwärtsgangstufe dem einen Teilgetriebe zugeordnet ist, auf jegliche Art von Schaltkupplung in diesem Teilgetriebe verzichtet werden, was ebenfalls zu einer axial kompakten Bauweise beiträgt.

Vorzugsweise ist die Stirnradgetriebeanordnung dazu ausgebildet, genau drei Vorwärtsgangstufen einzurichten, wobei die Stirnradgetriebeanordnung mit drei parallelen Wellenanordnungen ausgebildet ist, die so über Radsatzanordnungen miteinander verbunden sind, dass Antriebsleistung je nach eingelegter Vorwärtsgangstufe über wenigstens zwei der Wellenanordnungen übertragen wird.

Der Hybrid-Antriebsstrang zeichnet sich folglich dadurch aus, dass eine mittlere Anzahl von Vorwärtsgangstufen einrichtbar ist, die größer ist als zwei und kleiner als die Anzahl an Vorwärtsgangstufen, die bei herkömmlichen Kraftfahrzeug-Antriebssträngen realisierbar sind (wie zum Beispiel fünf, sechs, sieben oder mehr Vorwärtsgangstufen).

Dies ermöglicht es, den Verbrennungsmotor und die elektrische Maschine nahezu gleichwertig als Antriebsquelle zu verwenden. Ferner ermöglicht eine derartige Bauweise, den Verbrennungsmotor und die elektrische Maschine mit dem Eingang der Doppelkupplungsanordnung zu verbinden. Bei einer derartigen Konzeption steht aus bauraumtechnischen Gründen für das Getriebe nur wenig axialer Bauraum zur Verfügung. Eine Stirnradgetriebeanordnung mit genau drei oder genau vier Vorwärtsgangstufen kann dabei axial kurz bauen, so dass ein Einbau eines solchen Hybrid-Antriebsstranges auch in Front-Querbauweise in einem Kraftfahrzeug möglich ist.

Der Hybrid-Antriebsstrang kann als Range-Extender ausgelegt werden, bei dem die elektrische Maschine die Hauptantriebsquelle des Fahrzeugs darstellt und der Verbrennungsmotor nur für besondere Fahrevents (bei höheren Geschwindigkeiten, bei langen Fahrtstrecken etc.) genutzt wird. Durch die bevorzugte Maßnahme, den Verbrennungsmotor und die elektrische Maschine mit dem Eingang der Doppelkupplungsanordnung zu verbinden bzw. verbindbar zu machen, ist es dabei möglich, für beide Arten von Antriebsmotoren sämtliche Vorwärtsgangstufen der Stirnradgetriebeanordnung zur Kennungswandlung zur Verfügung zu stellen. Durch die Ausgestaltung des Stirnradgetriebes mit zwei Teilgetrieben und einer zugeordneten Doppelkupplung sind Gangstufenwechsel unter Last bzw. ohne Zugkraftunterbrechung durchführbar.

Ferner kann durch die relativ große Spreizung einer derart realisierten Stirnradgetriebeanordnung der Verbrennungsmotor auch zum Anfahren und für niedrige Fahrgeschwindigkeiten genutzt werden.

Es ist möglich, die Stirnradgetriebeanordnung ohne Rückwärtsgangstufe oder mit Rückwärtsgangstufe auszugestalten. Sofern die Stirnradgetriebeanordnung keine Rückwärtsgangstufe aufweist, ist ein Rückwärtsfahrbetrieb lediglich mittels der elektrischen Maschine möglich, die dann zu diesem Zweck in der umgekehrten Richtung angetrieben wird.

Insgesamt ist es folglich möglich, die Reichweite des Fahrzeuges nicht alleine von der Batteriekapazität abhängig zu machen. Bevorzugt ist es ferner möglich, dass kein separater Lade-Generator vorgesehen werden muss, der ausschließlich zum Aufladen einer Batterie des Kraftfahrzeuges verwendet wird. Hierdurch kann ferner Gewicht eingespart werden.

Die Betätigung der Doppelkupplungsanordnung kann beispielsweise durch Pumpenaktuatoren erfolgen, bei denen jeder Kupplung der Doppelkupplungsanordnung eine Pumpe zugeordnet ist, die jeweils über einen eigenen Elektromotor angetrieben wird. Ein Ausgang der Pumpe wird in diesem Fall vorzugsweise direkt mit einem Aktuator zum Betätigen der jeweiligen Kupplung verbunden, also ohne Zwischenschaltung von Proportionalventilen. Die Gangstufen der Stirnradgetriebeanordnung werden vorzugsweise mittels Schaltwalzen ein- und ausgelegt, wobei hierzu eine oder zwei Schaltwalzen verwendet werden. Die Schaltwalzen können elektromotorisch (mittels jeweiliger zugeordneter Elektromotoren) angetrieben werden.

Durch die Maßnahme, die Stirnradgetriebeanordnung mit drei parallelen Wellenanordnungen auszubilden, ist es generell ebenfalls möglich, eine axial kurze Bauweise der Stirnradgetriebeanordnung zu realisieren.

Gemäß einer besonders bevorzugten Ausführungsform ist der Verbrennungsmotor über eine Koppeleinrichtung mit einem Eingangsglied der Doppelkupplungsanordnung verbunden. Die Koppeleinrichtung kann eine kraftschlüssige oder formschlüssige schaltbare Kupplung sein. Gegebenenfalls kann auch die Koppeleinrichtung mittels eines Pumpenaktuators betätigt werden. Die Koppeleinrichtung kann in manchen Fällen auch durch einen Freilauf realisiert werden.

Dabei ist die elektrische Maschine vorzugsweise ebenfalls mit dem Eingangsglied der Doppelkupplungsanordnung verbunden. In diesem Fall ist es möglich, einen elektromotorischen Betrieb über das Doppelkupplungsgetriebe einzurichten, ohne den Verbrennungsmotor mitschleppen zu müssen.

Generell ist es auch denkbar, die elektrische Maschine über eine weitere Koppeleinrichtung mit dem Eingangsglied der Doppelkupplungsanordnung zu verbinden. Bevorzugt ist es jedoch, wenn die elektrische Maschine über eine feste Drehkopplung mit dem Eingangsglied der Doppelkupplungsanordnung verbunden ist. Bei einem rein verbrennungsmotorischen Betrieb wird die elektrische Maschine in diesem Fall mitgeschleppt, so dass diese beispielsweise als Generator arbeiten kann, oder aber im Leerlauf betrieben wird, so dass die Schleppverluste vernachlässigbar sind.

Ausführungsbeispiele der Erfindung sind in der Zeichnung dargestellt und werden in der nachfolgenden Beschreibung näher erläutert. Es zeigen:
- Fig. 1: eine schematische Längsdarstellung einer Ausführungsform eines erfindungsgemäßen Hybrid-Antriebsstranges;
- Fig. 2: einen nicht erfindungsgemäßen Hybrid-Antriebsstrang in einer schematischen Längsdarstellung;
- Fig. 3: einen nicht erfindungsgemäßen Hybrid-Antriebsstrang in einer schematischen Längsdarstellung
- Fig. 4: einen nicht erfindungsgemäßen Hybrid-Antriebsstrang in einer schematischen Längsdarstellung;
- Fig. 5: einen nicht erfindungsgemäßen in einer schematischen Längsdarstellung;
- Fig. 6: eine Ausführungsform eines erfindungsgemäßen Hybrid-Antriebsstrang in einer schematischen Längsdarstellung; und
- Fig. 7: einen nicht erfindungsgemäßen Hybrid-Antriebsstrang in einer schematischen Längsdarstellung.

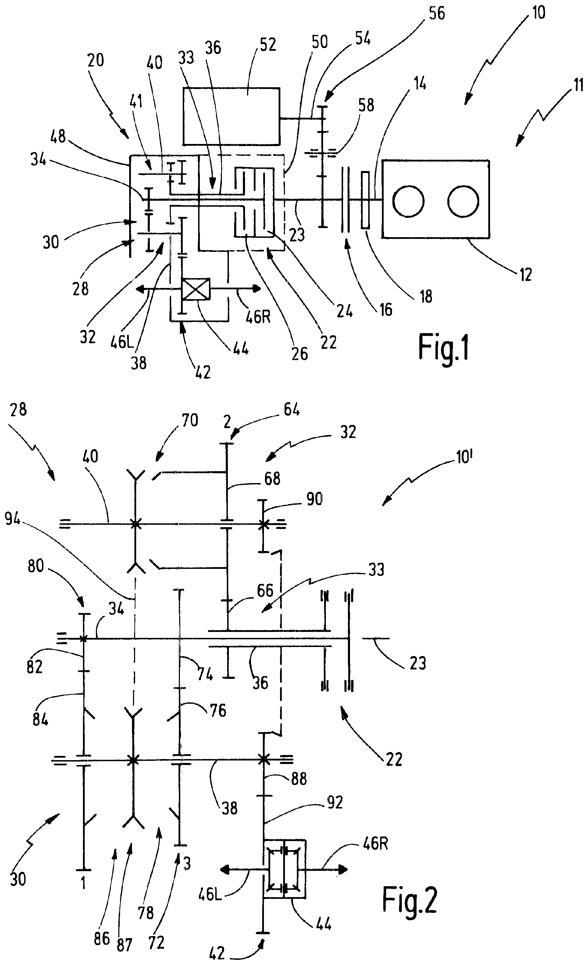

In Fig. 1 ist eine erste Ausführungsform eines Hybrid-Antriebsstranges schematisch im Längsschnitt dargestellt und generell mit 10 bezeichnet. Der Hybrid-Antriebsstrang 10 eignet sich zum Einbau in ein Kraftfahrzeug 11, und zwar insbesondere in Front-Querbauweise.

Der Hybrid-Antriebsstrang 10 beinhaltet einen Verbrennungsmotor 12 mit einer Kurbelwelle 14. Die Kurbelwelle 14 ist über eine erste Kupplung 16, und gegebenenfalls ein Zweimassenschwungrad 18, mit einem Doppelkupplungsgetriebe 20 verbunden.

Das Doppelkupplungsgetriebe 20 beinhaltet eine Doppelkupplungsanordnung 22 mit einem Eingangsglied 23, das mit einem Ausgangsglied der ersten Kupplung 16 verbunden ist. Ferner weist die Doppelkupplungsanordnung 22 eine zweite Kupplung 24 und eine dritte Kupplung 26 auf.

Das Doppelkupplungsgetriebe 20 beinhaltet ferner eine Stirnradgetriebeanordnung 28 mit einem ersten Teilgetriebe 30 und einem zweiten Teilgetriebe 32.

Die Doppelkupplungsanordnung 22 ist über eine Eingangswellenanordnung 33 mit der Stirnradgetriebeanordnung 28 verbunden. Genauer gesagt ist eine erste Eingangswelle 34 zum einen mit einem Ausgangsglied der zweiten Kupplung 24 verbunden und stellt eine Eingangswelle für das erste Teilgetriebe 30 dar. In entsprechender Weise ist eine zweite Eingangswelle 36 der Eingangswellenanordnung 33 mit einem Ausgangsglied der dritten Kupplung 26 verbunden und stellt eine Eingangswelle für das zweite Teilgetriebe 32 dar.

Die Stirnradgetriebeanordnung 28 beinhaltet ferner eine erste Ausgangswelle 38, die parallel zu der Eingangswellenanordnung 33 angeordnet ist, sowie eine zweite Ausgangswelle 40, die parallel zu der ersten Ausgangswelle 38 und zu der Eingangswellenanordnung 33 ausgerichtet ist. Die Eingangswellenanordnung 33 und die Ausgangswellen 38, 40 sind über schematisch angedeutete Radsatzanordnungen 41 zur Einrichtung von Gangstufen miteinander verbunden. Ferner sind die Ausgangswellen 38, 40 über einen Triebradsatz 42 mit einem Eingangsglied eines Differentials 44 verbunden, mittels dessen Antriebsleistung auf zwei angetriebene Räder 46L, 46R verteilt wird.

Das Doppelkupplungsgetriebe 20 beinhaltet ein Getriebegehäuse 48, innerhalb dessen vorzugsweise auch das Differential 44 und der Triebradsatz 42 angeordnet sind. Die Doppelkupplungsanordnung 22 ist vorzugsweise in einem Kupplungsgehäuse 50 aufgenommen, das vorzugsweise an das Getriebegehäuse 48 angeflanscht ist.

Der Antriebsstrang 10 beinhaltet ferner eine elektrische Maschine 52, die dazu ausgebildet ist, Antriebsleistung in einem Motorbetrieb bereitzustellen, oder aber auch elektrische Leistung in einem Generatorbetrieb.

Die elektrische Maschine 52 weist eine Motorwelle 54 auf, die über einen Stirnradsatz 56 mit dem Eingangsglied 23 der Doppelkupplungsanordnung 22 gekoppelt ist. Der Stirnradsatz 56 kann einstufig ausgebildet sein, oder wie dargestellt zweistufig, mit einer Zwischenwelle 58.

Die Stirnradgetriebeanordnung 28 weist im vorliegenden Fall genau drei Vorwärtsgangstufen auf oder genau vier Vorwärtsgangstufen. Die Stirnradgetriebeanordnung 28 kann hierbei eine Rückwärtsgangstufe aufweisen oder aber auch keine Rückwärtsgangstufe aufweisen. Im letzteren Fall wird ein Rückwärtsfahrbetrieb ausschließlich mittels der elektrischen Maschine 52 eingerichtet.

Eine erste Vorwärtsgangstufe der Stirnradgetriebeanordnung 28 kann ein Losrad aufweisen, das über einen Freilauf mit der zugeordneten Ausgangswelle gekoppelt ist. Für den Fall einer Stirnradgetriebeanordnung 28 mit drei Vorwärtsgangstufen kann es ferner bevorzugt sein, wenn einem der Teilgetriebe nur eine einzige Gangstufe zugeordnet ist, die in diesem Fall über zwei Festräder realisiert wird. In den beiden letztgenannten Varianten kann jeweils eine Schaltkupplung zum Ein- und Auslegen der jeweils zugeordneten Gangstufe eingespart werden.

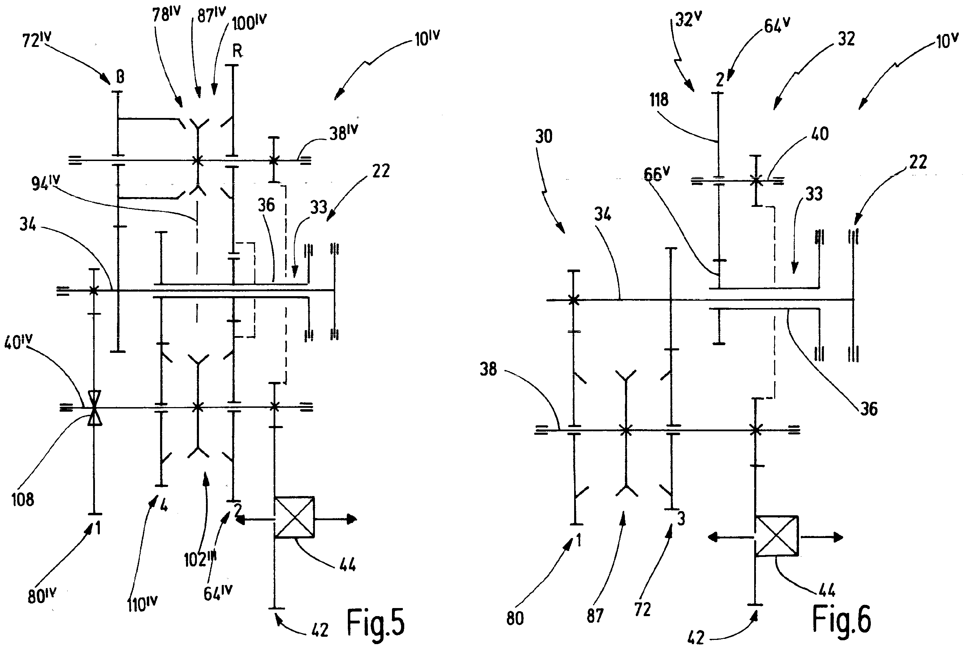

In den nachstehenden Figuren 2 bis 6 sind weitere Ausführungsformen von Hybrid-Antriebssträngen dargestellt, die hinsichtlich Aufbau und Funktionsweise generell dem in Fig. 1 dargestellten Hybrid-Antriebsstrang entsprechen, von denen jedoch nur die Ausführungsform nach Figur 6 erfindungsgemäß ist. Gleiche Elemente sind daher durch gleiche Bezugszeichen gekennzeichnet. Im Folgenden werden im Wesentlichen die Unterschiede erläutert.

Bei dem Hybrid-Antriebsstrang 10' der Fig. 2 beinhaltet die Stirnradgetriebeanordnung 28 benachbart zu einem Eingang (das heißt der Doppelkupplungsanordnung 22 zugewandt) einen Radsatz 64 für die Vorwärtsgangstufe 2. Der Radsatz 64 beinhaltet ein Festrad 66, das an der zweiten Eingangswelle 36 festgelegt ist, sowie ein Losrad 68, das drehbar an der zweiten Ausgangswelle 40 gelagert ist. An der zweiten Ausgangswelle 40 ist ferner eine Schaltkupplung 70 für die Vorwärtsgangstufe 2 angeordnet.

Die Stirnradgetriebeanordnung 28 beinhaltet ferner einen Radsatz 72 für die Vorwärtsgangstufe 3, der in axialer Richtung gesehen auf der der Doppelkupplungsanordnung 22 abgewandten Seite des Radsatzes 64 für die Vorwärtsgangstufe 2 angeordnet ist. Vorzugsweise ist der Radsatz 72 in axialer Richtung zwischen dem Radsatz 64 und der Schaltkupplung 70 angeordnet. Der Radsatz 72 für die Vorwärtsgangstufe 3 beinhaltet ein Festrad 74, das mit der ersten Eingangswelle 34 starr verbunden ist, sowie ein Losrad 76, das drehbar an der ersten Ausgangswelle 38 gelagert ist.

Ferner ist an der ersten Ausgangswelle 38 eine Schaltkupplung 78 für die Vorwärtsgangstufe 3 ausgebildet.

Die Stirnradgetriebeanordnung 28 beinhaltet ferner einen Radsatz 80 für die Vorwärtsgangstufe 1. Der Radsatz 80 ist im Bereich eines dem Eingang der Stirnradgetriebeanordnung 28 gegenüberliegenden Endes der Stirnradgetriebeanordnung 28 angeordnet und beinhaltet ein Festrad 82, das starr mit der ersten Eingangswelle 34 verbunden ist. Ferner weist der Radsatz 80 ein Losrad 84 auf, das drehbar an der ersten Ausgangswelle 38 gelagert ist. An der ersten Ausgangswelle 38 ist ferner eine Schaltkupplung 86 für die Vorwärtsgangstufe 1 angeordnet. Die Schaltkupplung 86 für die Vorwärtsgangstufe 1 bildet zusammen mit der Schaltkupplung 78 für die Vorwärtsgangstufe 3 ein Schaltkupplungspaket 87.

Die Stirnradgetriebeanordnung 28 beinhaltet ferner ein erstes Abtriebszahnrad 88, das drehfest mit der ersten Ausgangswelle 38 verbunden ist, sowie ein zweites Abtriebszahnrad 90, das drehfest mit der zweiten Ausgangswelle 40 verbunden ist. Die beiden Abtriebszahnräder 88, 90 stehen in Eingriff mit einem Triebzahnrad 92, das mit einem Eingangsglied des Differentials 44 verbunden ist. Die Abtriebszahnräder 88, 90 und das Triebzahnrad 92 bilden den Triebradsatz 42.

Der Triebradsatz 42 ist in axialer Richtung gesehen zwischen dem Radsatz 64 für die Vorwärtsgangstufe 2 und der Doppelkupplungsanordnung 22 angeordnet.

Die Schaltkupplung 78 bzw. das Schaltkupplungspaket 87 und die Schaltkupplung 70 sind in axialer Richtung miteinander ausgerichtet bzw. liegen im Wesentlichen in einer Axialebene, die bei 94 dargestellt ist und in axialer Richtung zwischen den Radsätzen 72 und 80 angeordnet ist.

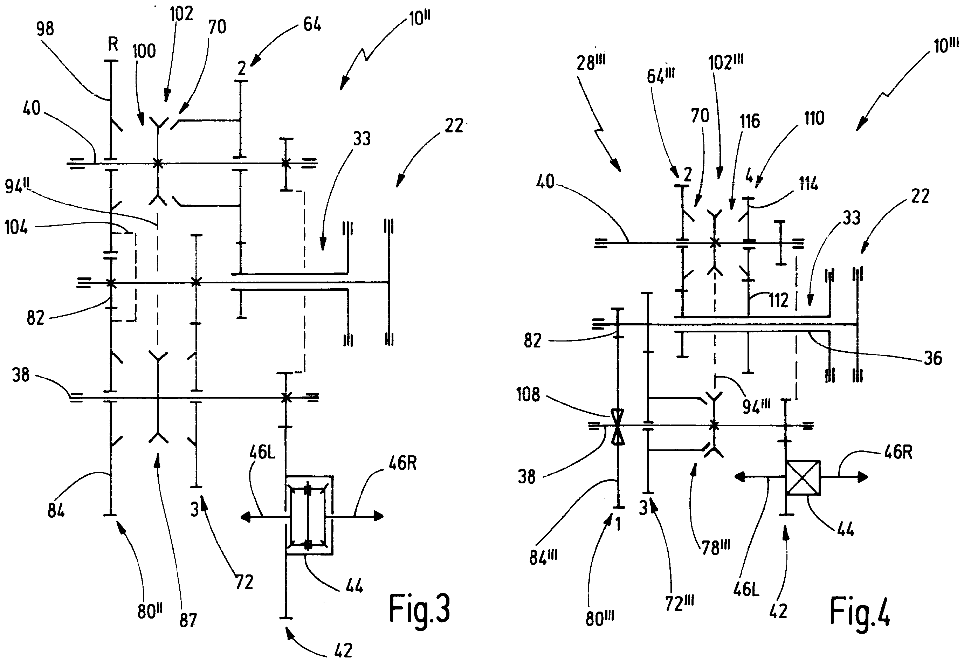

Fig. 3 zeigt einen Hybrid-Antriebsstrang 10", der hinsichtlich Aufbau und Funktionsweise generell dem Hybrid-Antriebsstrang 10' der Fig. 2 entspricht. Gleiche Elemente sind daher durch gleiche Bezugszeichen gekennzeichnet. Im Folgenden werden im Wesentlichen die Unterschiede erläutert.

Der Hybrid-Antriebsstrang 10" weist zusätzlich zu den Komponenten des Hybrid-Antriebsstranges 10' der Fig. 2 ein Losrad 98 für eine Rückwärtsgangstufe R auf, das drehbar an der zweiten Ausgangswelle 40 gelagert ist. Das Losrad 98 steht entweder direkt in Eingriff mit dem Losrad 84 für die Vorwärtsgangstufe 1, oder ist über ein Drehrichtungs-Umkehrrad mit der zugeordneten Eingangswelle gekoppelt.

Vorliegend beinhaltet der Hybrid-Antriebsstrang 10" ferner eine Schaltkupplung 100 für die Rückwärtsgangstufe, wobei die Schaltkupplung 100 zusammen mit der Schaltkupplung 70 ein zweites Schaltkupplungspaket 102 bildet, das axial mit dem Schaltkupplungspaket 87 ausgerichtet ist, wie es bei 94" angedeutet ist.

Die erforderliche Drehrichtungsumkehr 104 für die Rückwärtsgangstufe R ist in Fig. 3 schematisch angedeutet.

Bevorzugt ist es in jedem Fall, wenn das Losrad 98 für die Rückwärtsgangstufe R axial mit dem Radsatz 80" ausgerichtet ist bzw. Teil dieses Radsatzes 80" ist.

Fig. 4 zeigt eine weitere Ausführungsform eines Hybrid-Antriebsstranges 10"', der hinsichtlich Aufbau und Funktionsweise generell dem Antriebsstrang 10' der Fig. 2 entspricht. Gleiche Elemente sind daher durch gleiche Bezugszeichen gekennzeichnet. Im Folgenden werden im Wesentlichen die Unterschiede erläutert.

Bei dem Hybrid-Antriebsstrang 10'" ist das Losrad 84'" der Vorwärtsgangstufe 1 über einen Freilauf 108 mit der zugeordneten ersten Ausgangswelle 38 gekoppelt bzw. über den Freilauf 108 an der ersten Ausgangswelle 38 gelagert. Bei dieser Ausführungsform ist es nicht notwendig, für die Vorwärtsgangstufe 1 eine zugeordnete Schaltkupplung vorzusehen, so dass sich eine axial kompakte Bauweise ergibt. Die Ausgestaltung des Radsatzes 64'" mit dem Freilauf 108 lässt sich auch bei den zuvor beschriebenen Hybrid-Antriebssträngen sowie bei den nachstehend beschriebenen Hybrid-Antriebssträngen realisieren.

Ferner beinhaltet der Hybrid-Antriebsstrang 10"' einen Radsatz 110 für die Vorwärtsgangstufe 4. Der Radsatz 110 beinhaltet ein Festrad 112, das drehfest mit der zweiten Eingangswelle 36 verbunden ist, sowie ein Losrad 114, das drehbar an der zweiten Ausgangswelle 40 gelagert ist. Dem Losrad 114 ist eine Schaltkupplung 116 zugeordnet, die mit der Schaltkupplung 70 für die Vorwärtsgangstufe 2 in ein Schaltkupplungspaket 102"' integriert ist. Das Schaltkupplungspaket 102"' ist in axialer Richtung mit der Schaltkupplung 78"' für die Vorwärtsgangstufe 3 ausgerichtet, wie es bei 94'" angedeutet ist.

In axialer Richtung beinhaltet der Hybrid-Antriebsstrang 10"' ausgehend von dem Getriebeeingang folgende Radsätze bzw. Komponenten: den Triebradsatz 42, den Radsatz 110 für die Vorwärtsgangstufe 4, eine Ebene 94 für die Schaltkupplungen 78"', 70, 116, den Radsatz 64'" für die Vorwärtsgangstufe 2, den Radsatz 72'" für die Vorwärtsgangstufe 3 und den Radsatz 80'" für die Vorwärtsgangstufe 1.

Fig. 5 zeigt eine weitere Ausführungsform eines Hybrid-Antriebsstranges 10^{IV}, der hinsichtlich Aufbau und Funktionsweise generell dem Antriebsstrang 10' der Fig. 2 entspricht. Gleiche Elemente sind daher durch gleiche Bezugszeichen gekennzeichnet. Vorliegend beinhaltet der Hybrid-Antriebsstrang 10^{IV} ausgehend von dem Getriebeeingang den Triebradsatz 42, einen Radsatz 64^{IV}, der vorliegend zur Einrichtung der Vorwärtsgangstufe 2 und zur Einrichtung der Rückwärtsgangstufe R ausgebildet ist, eine Schaltkupplungsebene 94^{IV} mit Schaltkupplungspaketen 87^{IV} und 102^{IV}, einen Radsatz 110^{IV} für die Vorwärtsgangstufe 4, einen Radsatz 72^{IV} für die Vorwärtsgangstufe 3 und einen Radsatz 80^{IV} für die Vorwärtsgangstufe 1. Ein Losrad des Radsatzes 80^{IV} ist über einen Freilauf mit der zugeordneten Ausgangswelle 40^{IV} verbunden.

Bei dem Hybrid-Antriebsstrang 10^{IV} sind die Rückwärtsgangstufe R und die Vorwärtsgangstufe 1 verschiedenen Teilgetrieben zugeordnet, so dass ein Herausschaukeln aus Festfahrsituationen steuerungstechnisch einfach zu realisieren ist.

Der Radsatz 80^{IV} verbindet die erste Eingangswelle 34 und die zweite Ausgangswelle 40^{IV}. Der Radsatz 72^{IV} für die Vorwärtsgangstufe 3 verbindet die erste Eingangswelle 34 mit der ersten Ausgangswelle 38^{IV}. Der Radsatz 110^{IV} verbindet die zweite Eingangswelle 36 mit der zweiten Ausgangswelle 40^{IV}. Der Radsatz 64^{IV} verbindet die zweite Eingangswelle 36 mit der zweiten Ausgangswelle 40^{IV}, was die Vorwärtsgangstufe 2 angeht. Der Radsatz 64^{IV} beinhaltet ferner ein Losrad für die Rückwärtsgangstufe R, das an der ersten Ausgangswelle 38^{IV} drehbar gelagert ist.

Fig. 6 zeigt eine weitere Ausführungsform eines Hybrid-Antriebsstranges 10^{V}, der hinsichtlich Aufbau und Funktionsweise generell dem Antriebsstrang 10' der Fig. 2 entspricht. Gleiche Elemente sind daher durch gleiche Bezugszeichen gekennzeichnet. Im Folgenden werden im Wesentlichen die Unterschiede erläutert.

Bei dem Hybrid-Antriebsstrang 10^{V} beinhaltet der Radsatz 64^{V} ein Festrad 66^{V}, das drehfest mit der zweiten Eingangswelle 36 verbunden ist, sowie ein zweites Festrad 118, das drehfest mit der zweiten Ausgangswelle 40 verbunden ist. In diesem Fall weist das zweite Teilgetriebe 32^{V} nur eine Gangstufe auf, so dass auf das Bereitstellen eines Losrades und einer zugeordneten Schaltkupplung zum Einrichten dieser Gangstufe verzichtet werden kann.

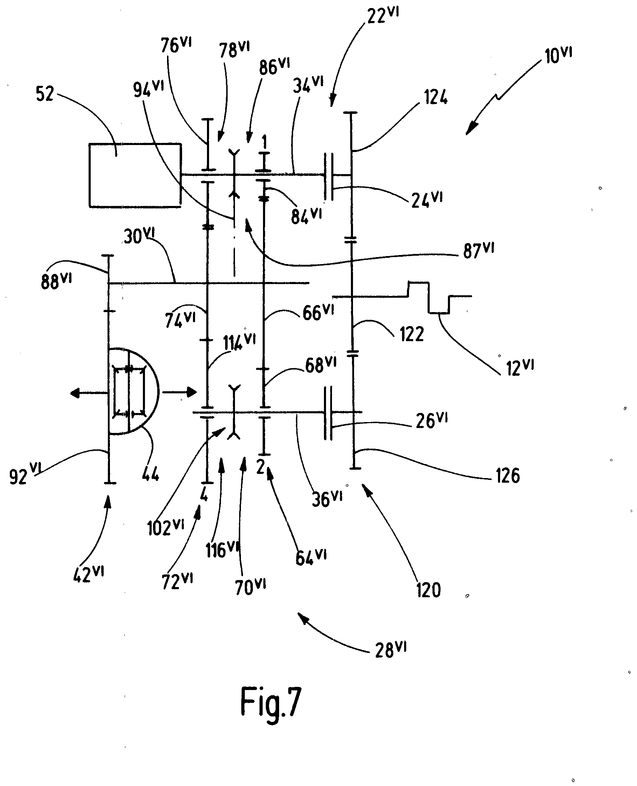

Fig. 7 zeigt eine weitere nicht erfindungsgemäße Ausführungsform eines Hybrid-Antriebsstranges 10^{VI}, der ein gegenüber den bisherigen Ausführungsformen etwas abweichendes Layout aufweist.

So beinhaltet der Hybrid-Antriebsstrang 10^{VI} der Fig. 7 einen Leistungsverzweigungsradsatz 120, der ein Zentralrad 122 sowie ein erstes Antriebszahnrad 124 und ein zweites Antriebszahnrad 126 aufweist. Die Antriebszahnräder 124, 126 stehen jeweils in Eingriff mit dem Zentralrad 122. Das Zentralrad 122 ist drehfest mit einer Kurbelwelle des Verbrennungsmotors 12^{VI} verbunden (gegebenenfalls über ein Zweimassenschwungrad).

Der Hybrid-Antriebsstrang 10^{VI} weist ferner eine erste Eingangswelle 34^{VI} und eine zweite Eingangswelle 36^{VI} auf, die parallel zueinander angeordnet sind (also nicht koaxial zueinander, wie bei den bisherigen Ausführungsformen).

Die erste Eingangswelle 34^{VI} ist über eine erste Kupplung 24^{VI} der Doppelkupplungsanordnung 22^{VI} mit dem ersten Antriebszahnrad 124 verbunden. In entsprechender Weise ist die zweite Eingangswelle 36^{VI} über eine zweite Kupplung 26^{VI} mit dem zweiten Antriebszahnrad 126 verbunden.

Der Hybrid-Antriebsstrang 10^{VI} weist ferner einen ersten Radsatz 64^{VI} auf, der ein Festrad 66^{VI} aufweist, das drehfest mit einer einzelnen Abtriebswelle 38^{VI} verbunden ist. Die einzelne Abtriebswelle 38^{VI} ist mit einem Abtriebszahnrad 88^{VI} verbunden, das mit einem Triebzahnrad 92^{VI} eines Differentials 44 in Eingriff steht und mit diesem einen Triebradsatz 42^{VI} bildet.

Der Radsatz 64^{VI} weist für die Vorwärtsgangstufe 2 ferner ein Losrad 68^{VI} auf, das drehbar an der zweiten Eingangswelle 36^{VI} gelagert ist und mittels einer zugeordneten Schaltkupplung 70^{VI} mit dieser verbindbar ist. Der Radsatz 64^{VI} weist für die Vorwärtsgangstufe 1 ferner ein Losrad 84^{VI} auf, das drehbar an der ersten Eingangswelle 34^{VI} gelagert ist und dem eine Schaltkupplung 86^{VI} zugeordnet ist. Die Losräder 84^{VI}, 68^{VI} stehen jeweils in Eingriff mit dem Festrad 66^{VI}, so dass sich eine so genannte Doppelverwendung bzw. Doppelnutzung ergibt.

Der Hybrid-Antriebsstrang 10^{VI} weist ferner einen weiteren Radsatz 72^{VI} auf, der ein mit der Ausgangswelle 38^{VI} starr verbundenes Festrad 74^{VI} aufweist. Ferner beinhaltet der Radsatz 72^{VI} ein drehbar an der ersten Ausgangswelle 34^{VI} gelagertes Losrad 76^{VI} für die Vorwärtsgangstufe 3 sowie ein drehbar an der zweiten Eingangswelle 36^{VI} gelagertes Losrad 114^{VI} für die Vorwärtsgangstufe 4.

Das Losrad 76^{VI} ist mittels einer Schaltkupplung 78^{VI} mit der ersten Eingangswelle 34^{VI} verbindbar. Die Schaltkupplung 78^{VI} ist mit der Schaltkupplung 86^{VI} in ein Schaltkupplungspaket 87^{VI} integriert.

Das Losrad 114^{VI} ist mittels einer Schaltkupplung 116^{VI} mit der zweiten Eingangswelle 36^{VI} verbindbar, wobei die Schaltkupplung 116^{VI} mit der Schaltkupplung 70^{VI} ein Schaltkupplungspaket 102^{VI} bildet.

Die Schaltkupplungspakete 87^{VI}, 102^{VI} liegen in einer axialen Ebene bzw. sind axial miteinander ausgerichtet, wie es bei 94^{VI} angedeutet ist. Die Schaltkupplungspakete liegen dabei zwischen den Radsätzen 64^{VI}, 72^{VI}.

Der Hybrid-Antriebsstrang 10^{VI} beinhaltet ferner eine elektrische Maschine 52, die mit der ersten Eingangswelle 34^{VI} verbunden ist. Ein rein elektromotorischer Betrieb ist folglich über die Vorwärtsgangstufen 1, 3 realisierbar. Ein verbrennungsmotorischer Betrieb ist über sämtliche Vorwärtsgangstufen 1, 2, 3, 4 realisierbar.

Sofern das Zentralrad 122 über eine Koppeleinrichtung 16 mit dem Verbrennungsmotor 12^{VI} verbunden ist (nicht dargestellt), kann die elektrische Maschine 52 auch die Vorwärtsgangstufen 2, 4 nutzen, indem die beiden Kupplungen 24^{VI}, 26^{VI} geschlossen werden und die Koppeleinrichtung geöffnet wird.

Ein Rückwärtsfahrbetrieb wird bei dieser Ausführungsform ausschließlich mittels der elektrischen Maschine 52 eingerichtet.

## Patentansprüche

1. Hybrid-Antriebsstrang (10) für ein Kraftfahrzeug (11), mit
- einem Verbrennungsmotor (12);
- einer elektrischen Maschine (52);
- einem Doppelkupplungsgetriebe (20), das eine Doppelkupplungsanordnung (22) und eine Stirnradgetriebeanordnung (28) mit zwei Teilgetrieben (30, 32) aufweist;
wobei die elektrische Maschine (52) mit einem Eingangsglied (23) der Doppelkupplungsanordnung (22) verbunden ist, wobei die Stirnradgetriebeanordnung (28) eine Eingangswellenanordnung (33) mit einer ersten Eingangswelle (34) des ersten Teilgetriebes (30) und einer zweiten koaxialen Eingangswelle (36) des zweiten Teilgetriebes (32) sowie eine erste Ausgangswelle (38) und eine zweite Ausgangswelle (40) aufweist, wobei die Ausgangswellen (38, 40) jeweils mit einem Abtriebszahnrad (88, 90) verbunden sind, wobei die Abtriebszahnräder (88, 90) mit einem Triebzahnrad (92) eines Differentials (44) in Eingriff stehen,
**dadurch gekennzeichnet, dass**
das eine (32) der Teilgetriebe nur eine Gangstufe aufweist, die durch einen Radsatz (64^{V}) mit zwei in Eingriff stehenden Festrädern (66^{V}, 118) gebildet ist.

2. Hybrid-Antriebsstrang nach Anspruch 1, **dadurch gekennzeichnet, dass** der Verbrennungsmotor (12) koaxial zu der Eingangswellenanordnung (33) angeordnet ist, wobei die elektrische Maschine (52) über einen Stirnradsatz (56) oder über eine Zahnkette mit dem Eingangsglied (23) der Doppelkupplungsanordnung (22) verbunden ist.

3. Hybrid-Antriebsstrang nach Anspruch 1 oder 2, **dadurch gekennzeichnet, dass** die Abtriebszahnräder (88, 90) und das Triebzahnrad (92) des Differentials (44) einen Triebradsatz (42) bilden, der in axialer Richtung zwischen der Doppelkupplungsanordnung (22) und Radsatzanordnungen (41) der Vorwärtsgangstufen angeordnet ist.

4. Hybrid-Antriebsstrang nach einem der Ansprüche 1 - 4, **dadurch gekennzeichnet, dass** die erste Eingangswelle (34) und die erste Ausgangswelle (38) über zwei Radsätze (72, 80) miteinander verbunden sind, die einer ersten und einer dritten Vorwärtsgangstufe zugeordnet sind.

5. Hybrid-Antriebsstrang nach Anspruch 4, **dadurch gekennzeichnet, dass** der der ersten Vorwärtsgangstufe zugeordnete Radsatz (80) ein an der ersten Ausgangswelle (38) über einen Freilauf (108) gelagertes Losrad (84) aufweist.

6. Hybrid-Antriebsstrang nach einem der Ansprüche 1 - 5, **dadurch gekennzeichnet, dass** die zweite Eingangswelle (36) und die zweite Ausgangswelle (40) über den Radsatz (64^{V}) miteinander verbunden sind, der mit den zwei in Eingriff stehenden Festrädern (66^{V}, 118) gebildet ist und der einer zweiten Vorwärtsgangstufe zugeordnet ist.

7. Hybrid-Antriebsstrang nach einem der Ansprüche 1 bis 6, **dadurch gekennzeichnet, dass** die Stirnradgetriebeanordnung (28) dazu ausgebildet ist, genau drei Vorwärtsgangstufen (1-3) einzurichten, wobei die Stirnradgetriebeanordnung (28) mit drei parallelen Wellenanordnungen (33, 38, 40) ausgebildet ist, die so über Radsatzanordnungen (41) miteinander verbunden sind, dass Antriebsleistung je nach eingelegter Vorwärtsgangstufe über wenigstens zwei der Wellenanordnungen (33, 38, 40) übertragen wird.

8. Hybrid-Antriebsstrang nach Anspruch 7, **dadurch gekennzeichnet, dass** der Verbrennungsmotor (12) über eine Koppeleinrichtung (16) mit einem Eingangsglied (23) der Doppelkupplungsanordnung (23) verbunden ist.

## Claims

1. Hybrid power train (10) for a motor vehicle (11), having
- an internal combustion engine (12);
- an electric machine (52);
- a double clutch transmission (20) which has a double clutch arrangement (22) and a spur gear transmission arrangement (28) with two component transmissions (30, 32);
the electric machine (52) being connected to an input member (23) of the double clutch arrangement (22), the spur gear transmission arrangement (28) having an input shaft arrangement (33) with a first input shaft (34) of the first component transmission (30) and a second coaxial input shaft (36) of the second component transmission (32), and a first output shaft (38) and a second output shaft (40), the output shafts (38, 40) being connected in each case to an output gearwheel (88, 90), the output gearwheels (88, 90) being in engagement with a drive gearwheel (92) of a differential (44), **characterized in that** one (32) of the component transmissions has only one gear stage which is formed by way of a gear set (64^{V}) with two fixed gears (66^{V}, 118) which are in engagement.

2. Hybrid power train according to Claim 1, **characterized in that** the internal combustion engine (12) is arranged coaxially with respect to the input shaft arrangement (33), the electric machine (52) being connected via a spur gear set (56) or via a ladder chain to the input member (23) of the double clutch arrangement (22).

3. Hybrid power train according to Claim 1 or 2, **characterized in that** the output gearwheels (88, 90) and the drive gearwheel (92) of the differential (44) form a drive gear set (42) which is arranged in the axial direction between the double clutch arrangement (22) and gear set arrangements (41) of the forward gear stages.

4. Hybrid power train according to one of Claims 1 to 4, **characterized in that** the first input shaft (34) and the first output shaft (38) are connected to one another via two gear sets (72, 80) which are assigned to a first and a third forward gear stage.

5. Hybrid power train according to Claim 4, **characterized in that** the gear set (80) which is assigned to the first forward gear stage has an idler gear (84) which is mounted via a freewheel (108) on the first output shaft (38).

6. Hybrid power train according to one of Claims 1 to 5, **characterized in that** the second input shaft (36) and the second output shaft (40) are connected to one another via the gear set (64^{V}) which is formed by way of the two fixed gears (66^{V}, 118) which are in engagement, and which is assigned to a second forward gear stage.

7. Hybrid power train according to one of Claims 1 to 6, **characterized in that** the spur gear arrangement (28) is configured to set up precisely three forward gear stages (1-3), the spur gear transmission arrangement (28) being configured with three parallel shaft arrangements (33, 38, 40) which are connected to one another via gear set arrangements (41) in such a way that, depending on the engaged forward gear stage, drive power is transmitted via at least two of the shaft arrangements (33, 38, 40).

8. Hybrid power train according to Claim 7, **characterized in that** the internal combustion engine (12) is connected via a coupling device (16) to an input member (23) of the double clutch arrangement (23).

## Revendications

1. Chaîne cinématique hybride (10) pour un véhicule automobile (11), comprenant
- un moteur à combustion interne (12) ;
- une machine électrique (52) ;
- une transmission à double embrayage (20), qui présente un agencement à double embrayage (22) et un agencement à engrenages droits (28) avec deux transmissions partielles (30, 32) ;
la machine électrique (52) étant reliée à un organe d'entrée (23) de l'agencement à double embrayage (22), l'agencement à engrenages droits (28) présentant un agencement d'arbre d'entrée (33) avec un premier arbre d'entrée (34) de la première transmission partielle (30) et un deuxième arbre d'entrée coaxial (36) de la deuxième transmission partielle (32) ainsi qu'un premier arbre de sortie (38) et un deuxième arbre de sortie (40), les arbres de sortie (38, 40) étant à chaque fois reliés à une roue dentée de prise de force (88, 90), les roues dentées de prise de force (88, 90) étant en prise avec une roue dentée d'entraînement (92) d'un différentiel (44), **caractérisée en ce que**
l'une (32) des transmissions partielles présente seulement un rapport de transmission qui est formé par un jeu de pignons (64^{V}) avec deux pignons fixes (66^{V}, 118) en prise l'un avec l'autre.

2. Chaîne cinématique hybride selon la revendication 1, **caractérisée en ce que** le moteur à combustion interne (12) est disposé coaxialement par rapport à l'agencement d'arbre d'entrée (33), la machine électrique (52) étant connectée par le biais d'un jeu de pignons droits (56) ou par le biais d'une chaîne dentée à l'organe d'entrée (23) de l'agencement à double embrayage (22).

3. Chaîne cinématique hybride selon la revendication 1 ou 2, **caractérisée en ce que** les roues dentées de prise de force (88, 90) et la roue dentée d'entraînement (92) du différentiel (44) forment un jeu de pignons d'entraînement (42) qui est disposé dans la direction axiale entre l'agencement à double embrayage (22) et les agencements de jeux de pignons (41) des rapports de transmission de marche avant.

4. Chaîne cinématique hybride selon l'une quelconque des revendications 1 à 4, **caractérisée en ce que** le premier arbre d'entrée (34) et le premier arbre de sortie (38) sont connectés l'un à l'autre par le biais de deux jeux de pignons (72, 80) qui sont associés à un premier et à un troisième rapport de transmission de marche avant.

5. Chaîne cinématique hybride selon la revendication 4, **caractérisée en ce que** le jeu de pignons (80) associé au premier rapport de transmission de marche avant présente un pignon fou (84) supporté sur le premier arbre de sortie (38) par le biais d'une roue libre (108).

6. Chaîne cinématique hybride selon l'une quelconque des revendications 1 à 5, **caractérisée en ce que** le deuxième arbre d'entrée (36) et le deuxième arbre de sortie (40) sont connectés l'un à l'autre par le biais du jeu de pignons (64^{V}), qui est formé avec les deux pignons fixes en prise l'un avec l'autre (66^{V}, 118) et qui est associé à un deuxième rapport de transmission de marche avant.

7. Chaîne cinématique hybride selon l'une quelconque des revendications 1 à 6, **caractérisée en ce que** l'agencement à engrenages droits (28) est réalisé de manière à prévoir exactement trois rapports de transmission de marche avant (1-3), l'agencement à engrenages droits (28) étant réalisé avec trois agencements d'arbres parallèles (33, 38, 40) qui sont connectés les uns aux autres par le biais d'agencements de jeux de pignons (41) de telle sorte que la puissance d'entraînement soit transmise, en fonction du rapport de transmission de marche avant enclenché, par le biais d'au moins deux des agencements d'arbres (33, 38, 40).

8. Chaîne cinématique hybride selon la revendication 7, **caractérisée en ce que** le moteur à combustion interne (12) est connecté par le biais d'un dispositif d'accouplement (16) à un organe d'entrée (23) de l'agencement à double embrayage (23).
